# EUROPÄISCHE PATENTANMELDUNG

(11) **EP 2 949 877 A1**
(43) Veröffentlichungstag der Anmeldung: **02.12.2015**
(21) Anmeldenummer: 15160692.8
(22) Anmeldetag: 25.03.2015
(51) Int. Cl.: F01D 17/08, F01D 21/00, G01N 25/00, G01N 21/00, G01K 17/00, F01D 17/02

(54) **Isolierschicht mit thermochromem Farbstoff für Strömungskraftmaschinen**

(30) Priorität: 16.04.2014 DE 102014207289
(71) Anmelder: Siemens Aktiengesellschaft, 80333 München (DE)
(72) Erfinder: Link, Marco, 45476 Mülheim (DE); Savilius, Nicolas, 45359 Essen (DE)

(57) **Zusammenfassung**

Die Erfindung betrifft eine Strömungskraftmaschine (1) mit mindestens einer Isolierschicht (2), welche auf der Außenseite des Gehäuses (3) der Strömungskraftmaschine (1) zur thermischen Isolierung angeordnet ist, wobei die Isolierschicht (2) mit einem thermochromen Farbstoff (4) derart versehen ist, dass bei Leckageaustritt von Arbeitsfluid (5) aus der Strömungskraftmaschine (1) dieses mit der Isolierschicht (2) in thermischen Kontakt geraten und eine Verfärbung des thermochromen Farbstoffs (4) bewirken kann.

## Beschreibung

Die vorliegende Erfindung betrifft eine Strömungskraftmaschine mit Isolierschicht, zum verbesserten Nachweis eines Leckageaustritts von Arbeitsfluid der Strömungskraftmaschine. Weiter betrifft die Erfindung eine derartige Isolierschicht, die einen Leckageaustritt bei einer Strömungskraftmaschine nachweisen lässt.

Beim Betrieb von Strömungskraftmaschinen (bspw. Gasturbinen, Kompressoren oder auch Dampfturbinen) können Arbeitsfluide der Strömungskraftmaschine ungewollt austreten. Typische Orte für den Austritt des Arbeitsfluides sind etwa Bauteilschlitze, welche eine Fluidverbindung zum Strömungsinnenraum der Strömungskraftmaschine aufweisen, falls ein Leck vorhanden ist. So kann es bspw. vorkommen, dass Arbeitsfluid aus dem Inneren der Strömungskraftmaschine durch derartige Bauteilschlitze nach außen austritt, und dort Schäden an der Strömungskraftmaschine bzw. an weiteren daran angebrachten Funktionsbauteilen hervorruft. So können etwa aus einer Gasturbine austretende Heißgase, die an der äußeren Oberfläche des Gehäuses angebrachten Brennstoffschläuche, Sensorik bzw. Elektronik und andere temperaturempfindliche Bauteile beschädigen. Gleichzeitig kann aufgrund des Austritts des Heißgases eine Leistungs- bzw. Wirkungsgradverringerung die Folge sein, wodurch die gesamte Strömungskraftmaschine eine Effizienzverminderung erfährt.

Um die aus einer Strömungskraftmaschine bei Leckage austretenden Arbeitsfluide nachzuweisen, werden typischerweise Thermographiekameras eingesetzt, die dazu ausgebildet sind, Temperaturänderungen bzw. Temperaturverteilungen auf der Oberfläche der Strömungskraftmaschine zu erfassen. Mitunter ist es hierbei erforderlich, die die Strömungskraftmaschine umgebende Isolierschicht zu entfernen, um eine genaue Identifizierung und Lokalisierung des Austritts des Arbeitsfluides vornehmen zu können.

Nachteilig an diesen aus dem Stand der Technik bekannten Verfahren zur Lokalisierung von Austrittsorten des Arbeitsfluides ist einerseits der verhältnismäßig hohe technische Aufwand, da neben den technischen Vorkehrungen mitunter auch die Isolierschicht der Strömungskraftmaschine in zeitaufwendigen Arbeitsschritten entfernt werden muss. Während dieser Arbeit sind mitunter starke Sicherheitsvorkehrungen einzuhalten, was ebenso als nachteilig einzuschätzen ist. Zudem kann der Austritt des Arbeitsfluids bei Leckage zeitlich variieren, wodurch es zudem erschwert ist, eine genaue Lokalisierung des Austrittsortes des Arbeitsfluides bei einem bestimmten Messzeitpunkt an der Oberfläche der Strömungskraftmaschine festzustellen.

Insofern stellt es sich als technisch erforderlich heraus, eine geeignete Strömungskraftmaschine vorzuschlagen, welche die aus dem Stand der Technik bekannten Nachteile vermeiden kann. Insbesondere soll eine Strömungskraftmaschine vorgeschlagen werden, die eine möglichst genaue Lokalisierung des Austrittsortes des Arbeitsfluides bei Leckageaustritt aus der Strömungskraftmaschine erlaubt. Diese Aufgaben sollen insbesondere erfüllt werden können, ohne die gesamte Isolierschicht von der Strömungskraftmaschine im Bereich des Gehäuses entfernen zu müssen. Weiterhin soll eine Strömungskraftmaschine vorgeschlagen werden, die einen entsprechenden Nachweis auch ohne zusätzliche technische Hilfsvorrichtungen ermöglichen kann.

Diese der Erfindung zugrundeliegenden Aufgaben werden gelöst durch eine Strömungskraftmaschine gemäß Anspruch 1 sowie durch eine Isolierschicht gemäß Anspruch 7.

Insbesondere werden die der Erfindung zugrundeliegenden Aufgaben gelöst durch eine Strömungskraftmaschine mit mindestens einer Isolierschicht, welche auf der Außenseite des Gehäuses der Strömungskraftmaschine zur thermischen Isolierung angeordnet ist, wobei die Isolierschicht mit einem thermochromen Farbstoff derart versehen ist, dass bei Leckageaustritt von Arbeitsfluid aus der Strömungskraftmaschine, dieses mit der Isolierschicht in thermischen Kontakt geraten und eine Verfärbung des thermochromen Farbstoffs bewirken kann.

Weiter werden die der Erfindung zugrundeliegenden Aufgaben durch eine Isolierschicht gelöst, die zur Anordnung an der Außenseite eines Gehäuses einer Strömungskraftmaschine geeignet ist, insbesondere einer vorab wie auch nachfolgend beschriebenen Gasturbine, zur thermischen Isolierung, wobei die Isolierschicht mit einem thermochromen Farbstoff versehen ist.

An dieser Stelle ist darauf hinzuweisen, dass eine Strömungskraftmaschine zur Umwandlung von Strömungsenergie in Nutzenergie, insbesondere kinetischer Energie dient, welche wiederum in elektrische Energie umgesetzt werden kann. Strömungskraftmaschinen im erfindungsgemäßen Sinn, sind etwa Gasturbinen, Dampfturbinen, oder auch Kompressoren, die zur Verdichtung von Luft dienen.

Erfindungsgemäß ist vorgesehen, dass die an der Außenseite des Gehäuses der Strömungskraftmaschine angeordnete Isolierschicht mit einem thermochromen Farbstoff versehen ist, welcher erlaubt, das thermische Umfeld durch eine geeignete Farbwiedergabe optisch messbar werden zu lassen. Insbesondere ist die Verfärbung des thermochromen Farbstoffs nicht nur mit technischen optischen Mitteln erfassbar, sondern vor allem mit dem Auge sichtbar. Durch diese Sichtbarmachung des thermischen Umfeldes können Arbeitsfluide bei Leckageaustritt aus der Strömungskraftmaschine indirekt erfasst werden, indem nämlich das Arbeitsfluid das thermische Umfeld der Isolierschicht, die mit dem thermochromen Farbstoff versehen ist, zu höheren bzw. niedrigeren Temperaturen hin beeinflusst. Aufgrund der Veränderung des Temperaturumfeldes kommt es zu einer Verfärbung des thermochromen Farbstoffs, welche unmittelbar von außen wahrgenommen werden kann. Durch eine örtliche Nachverfolgung der Verfärbung auf der Isolierschicht kann somit verhältnismäßig leicht und zielgerichtet der Ort des Leckageaustritts an der Strömungskraftmaschine ermittelt werden. Hierzu mag es erforderlich sein, dass Teile der Isolierschicht bereichsweise manipuliert bzw. entfernt werden müssen, jedoch die Entfernung der gesamten Isolierschicht kann vermieden werden. Ausführungsgemäß kann es jedoch auch sein, dass die Isolierschicht vollständig intakt und unentfernt bleiben kann, wobei eine Ermittlung des Leckageaustrittsortes dennoch möglich bleibt.

Thermochrome Farbstoffe haben grundsätzlich die Eigenschaft, sich bei Temperaturänderungen zu verfärben. Dieser Vorgang ist im Normalfall umkehrbar, so dass ein thermochromer Farbstoff bei Wiederherstellung der ursprünglichen Temperatur, wieder seine ursprüngliche Farbe annimmt. Allgemein ist eine Verfärbung des thermorchromen Fabrstoffs als eine Änderung des Farbvektors in einem dreidimensionalen Farbraum zu verstehen. Ein derartiger dreidimensionaler Farbraum ist bspw. der RGB-Farbraum, welcher als additiver Farbraum durch Mischung dreier Grundfarben (rot, grün und blau) nachgebildet ist. Jeder Farbe entspricht in diesem Farbraum ein Farbvektor, welcher von dem Ursprung des dreidimensionalen Farbraums zu einem konkreten Farbwert reicht. Bei Veränderung des Farbwertes kann sich dieser Farbvektor entweder hinsichtlich der Länge oder der Richtung in dem dreidimensionalen Farbraum ändern. Somit können alle Farben durch additive Farbmischung im Sinne einer Vektoraddition erzeugt werden, und einer technischen Erfassung zugänglich gemacht werden. Ändert sich also der Farbwert des thermochromen Farbstoffs, tritt eine Verfärbung ein.

Die thermische Isolierschicht ist weiterhin typischerweise als separat manipulierbarer Isolierkörper ausgeführt, auf welchen, bzw. in welchen der thermochrome Farbstoff aufgebracht oder eingebracht ist. Bspw. ist der Farbstoff in ein Außengewebe des Isolierkörpers eingearbeitet. Typischerweise liegt der thermochrome Farbstoff in Form von Partikeln vor, die in das Gewebe gezielt eingebracht sein können.

Der thermochrome Farbstoff ist so auf bzw. in der Isolierschicht einzubringen bzw. anzuordnen, dass er thermischen Kontakt zum Außenbereich aufweist. Insbesondere ist es erforderlich, dass der thermochrome Farbstoff bei Austritt von Arbeitsfluid aus der Strömungskraftmaschine mit diesem in thermischen Kontakt geraten kann, wobei gleichzeitig die Erfassung der Verfärbung mit optischen Mitteln gewährleistet sein muss. Tritt also etwa Arbeitsfluid nach einem Leckageaustritt aus der Strömungskraftmaschine aus, wird der thermochrome Farbstoff auf eine abweichende Temperatur von der zuvor vorherrschenden Temperatur erhöht bzw. erniedrigt und eine Verfärbung kann nachgewiesen werden. Die Verfärbung des thermochromen Farbstoffes muss hierbei in dem Temperaturbereich erfolgen, welcher zwischen der bisher vorherrschenden Temperatur und der nach Leckageaustritt vorherrschenden Temperatur vorliegt. Insofern mag es erforderlich sein, die betreffenden Temperaturen zunächst messtechnisch zu erfassen bzw. abzuschätzen und danach einen geeigneten thermochromen Farbstoff auszuwählen, welcher eine Verfärbung in einem bestimmten Temperaturbereich aufweisen kann. Thermochrome Farbstoffe gibt es für die verschiedensten Temperatur-Messbereiche. Je nach Anwendungsfall ist also ein geeigneter thermochromer Farbstoff auszuwählen.

Gemäß einer ersten bevorzugten Ausführungsform der erfindungsgemäßen Strömungskraftmaschine ist vorgesehen, dass der thermochrome Farbstoff einen Thermolack umfasst. Alternative thermochrome Farbstoffe können etwa in Form von Farbstoffpartikeln ausgeführt sein, die in die Isolierschicht eingearbeitet bzw. mit Hilfe von geeigneten Befestigungsmitteln an der Isolierschicht angebracht werden. Bspw. können Metalloxidpigmente, Zinkoxid oder auch Titanoxid vorgesehen sein, die als thermochrome Farbstoffe eingesetzt werden. Bei Thermolacken sind derartige Farbstoffe bereits suspensiv in dem Lack gebunden und können etwa durch Aufsprühen auf die Isolierschicht leicht aufgebracht werden. Je nach Bindemittel kann dieses auf der Isolierschicht verbleiben oder auch verdampfen. Insbesondere bei Temperaturen von weniger als 400 °C kann das Bindemittel mitunter auf der Isolierschicht verbleiben, ohne dass eine Zersetzung des Thermolackes befürchtet werden muss.

Gemäß einer weiteren vorteilhaften Ausführungsform der Erfindung ist vorgesehen, dass der thermochrome Farbstoff eine Verfärbung im Temperaturbereich zwischen 150 °C und 400 °C aufweist. Damit eignen sich diese thermochromen Farbstoffe insbesondere dazu, den Leckageaustritt von Arbeitsfluid bei einem Verdichter einer Gasturbine nachzuweisen, in welchem das Arbeitsfluid bis auf eine Temperatur von etwa 400 ° angehoben wird. Kommt es also zu einem Leckageaustritt des Arbeitsfluids aus dem Verdichter kann dieser durch Verfärbung des thermochromen Farbstoffes leicht nachgewiesen werden.

Alternativ hierzu ist es auch möglich, dass der thermochrome Farbstoff eine Verfärbung im Temperaturbereich zwischen 400 °C und 700 °C aufweist. Mit derartigen thermochromen Farbstoffen kann insbesondere gut der Leckageaustritt von Arbeitsfluid aus der Entspannungsturbine einer als Gasturbine ausgebildeten Strömungskraftmaschine erfasst werden, in welcher Heißgas von einer Temperatur von über 1000 °C auf ungefähr 550 °C abgekühlt wird. Sollte es zu einem Leckageaustritt von solchem Heißgas als Arbeitsfluid in der Entspannungsturbine kommen, kann dies durch eine geeignete Verfärbung des betreffenden thermochromen Farbstoffs nachgewiesen werden. Insbesondere kann die Erfassung der Verfärbung bevorzugt in dem Entspannungsbereich der Entspannungsturbine vorgenommen werden, in welchem das Arbeitsfluid bereits eine Verminderung seiner Temperatur durch thermische Entspannung erfahren hat. Besonders bevorzugt sind hier Entspannungsbereiche der letzten drei Schaufelstufen in der Entspannungsturbine einer Gasturbine.

Gemäß einer weiteren besonders bevorzugten Ausführungsform der Erfindung ist vorgesehen, dass die Strömungskraftmaschine als Gasturbine ausgeführt ist und auf der Außenseite des Gehäuses der Gasturbine mindestens zwei unterschiedliche Isolierschichten angeordnet sind, welche jeweils an unterschiedlichen Orten des Gehäuses angeordnet sind, und welche unterschiedliche Isolierschichten jeweils mit unterschiedlichen thermochromen Farbstoffen versehen sind. Aufgrund des Versehens mit unterschiedlichen thermochromen Farbstoffen tritt bei diesen Isolierschichten auch bei unterschiedlichen Temperaturen bzw. Temperaturbereichen eine Verfärbung auf. So tritt bspw. eine Verfärbung in den Temperaturbereichen auf, welche der Temperatur des Arbeitsfluids in dem betreffenden Bereich einer Gasturbine entspricht. So kann etwa der thermochrome Farbstoff, welcher dem Bereich des Verdichters zugeordnet ist, bevorzugt eine Verfärbung im Temperaturbereich zwischen 150 °c und 400 °C aufweisen, wohingegen der thermochrome Farbstoff, welcher dem Bereich der Entspannungsturbine zugeordnet ist, bevorzugt eine Verfärbung im Temperaturbereich zwischen 400 °C und 700 °C aufweisen. Folglich kann ein Großteil der Oberfläche einer solchen Gasturbine mit geeigneten Isolierschichten versehen werden.

Entsprechend einer weiteren bevorzugten Ausführungsform der Erfindung ist vorgesehen, dass die Isolierschicht als eine Isoliermatte ausgeführt ist, welche wenigstens auf einer Seite, bevorzugt auf allen Seiten mit thermochromem Farbstoff versehen ist. Eine Matte ist hierbei gekennzeichnet als eine Struktur, welche wenigstens teilweise dämpfend bei manueller Kraftbeaufschlagung fühlbar nachgibt. Insofern ist der Begriff der Matte breit zu verstehen und auch andere Strukturen wie Kissen und Decken sind darunter zu fassen. Derartige Isoliermatten weisen typischerweise geeignete Lagen bzw. Gewebeschichten auf, auf welche bzw. in welche der thermochrome Farbstoff leicht auf- bzw. eingebracht werden kann. Derartige Isoliermatten können nicht nur bei der Herstellung leicht gehandhabt werden, sondern auch bei dem Betrieb einer Gasturbine, welcher es mitunter erfordert, dass die Isoliermatten wenigstens teilweise gelöst bzw. entfernt werden. Durch die einfache Lösung bzw. Entfernung verschiedener Bereiche dieser Isoliermatten kann so der Austrittspfad des Arbeitsfluids leichter nachvollzogen werden, und die Lokalisierung des genauen Austrittsortes wird hierdurch mitunter erleichtert.

Gemäß einer weiteren besonders bevorzugten Ausführungsform der erfindungsgemäßen Isolierschicht ist vorgesehen, dass diese als Isoliermatte ausgeführt ist, welche wenigstens auf einer Seite bevorzugt auf allen Seiten mit einem thermochromen Farbstoff versehen ist. Die Vorteile dieser Ausführungsform ergeben sich analog der vorab beschriebenen Vorteile für die ausführungsgemäße Strömungskraftmaschine, die mit einer solchen Isoliereschicht versehen ist.

Nachfolgend soll die Erfindung anhand von einzelnen Figuren im Detail näher beschrieben werden. Hierbei sei darauf hingewiesen, dass die Figuren lediglich schematisch zu verstehen sind, und keine Einschränkung hinsichtlich der Ausführbarkeit der Erfindung daraus abgeleitet werden kann.

Weiterhin sei darauf hingewiesen, dass die nachfolgenden technischen Merkmale in beliebiger Kombination miteinander beansprucht werden, soweit die Kombination die der Erfindung zugrundeliegende Aufgabe lösen kann.

Fernerhin ist darauf hinzuweisen, dass die technischen Merkmale, welche mit gleichen Bezugszeichen versehen sind, auch gleiche technische Wirkung aufweisen.

Hierbei zeigen:
- Figur 1: eine schematische seitliche Ansicht einer Ausführungsform einer erfindungsgemäßen Strömungskraftmaschine;
- Figur 2: eine schematische Ansicht in Perspektive auf eine Ausführungsform einer erfindungsgemäßen Isolierschicht.

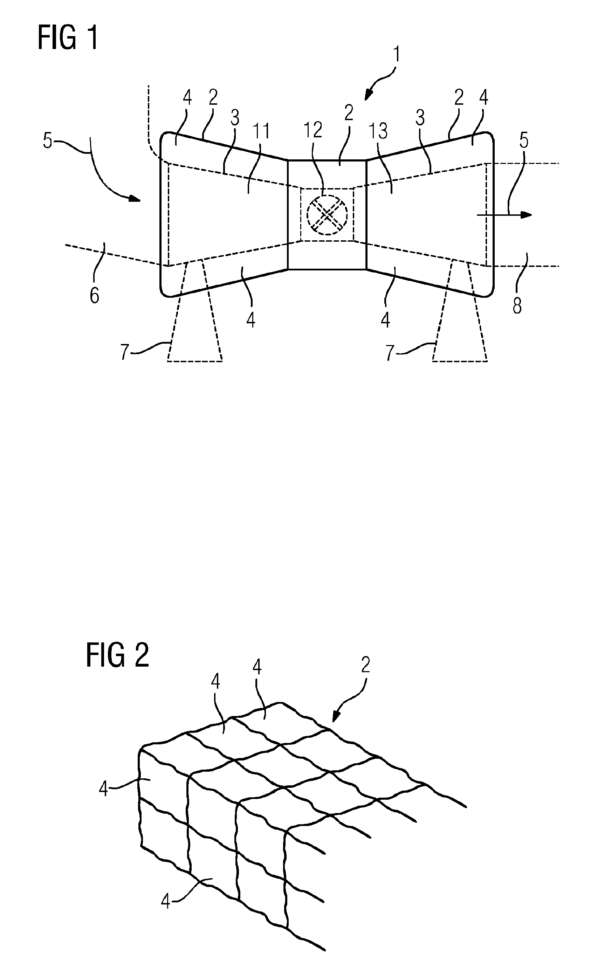

Figur 1 zeigt eine schematische seitliche Schnittansicht durch eine als Gasturbine ausgeführte Strömungskraftmaschine 1, welche neben einem Verdichter 11, einer Brennkammer 12 auch eine Entspannungsturbine 13 aufweist. Die Strömungskraftmaschine 1 saugt hierbei Arbeitsfluid 5 über ein Ansaughaus 6 in den Verdichter 11 an und verdichtet dieses vor Zuführung an die Brennkammer 12. In der Brennkammer 12 wird dieses verdichtete Arbeitsfluid zusammen mit Brennstoff verbrannt und über die Entspannungsturbine 13 unter gleichzeitiger Abgabe von Entspannungsarbeit thermisch entspannt. Das so entspannte Arbeitsfluid wird als Abgas (vorliegend bezeichnet als Arbeitsfluid 5) über den Abgaskanal 8 abgeführt.

Aufgrund der thermischen Prozesse in der als Gasturbine ausgebildeten Strömungskraftmaschine 1 ergeben sich unterschiedliche Betriebstemperaturen, etwa im Bereich des Verdichters 11, der Brennkammer 12 oder der Entspannungsturbine 13.

Tritt nun aufgrund einer Leckage Arbeitsfluid 5 aus der Strömungskraftmaschine 1 aus, entweicht dieses über das Gehäuse 3 in den Außenbereich. Gleichzeitig kommt es aufgrund der thermischen Beladung des so austretenden Arbeitsfluides zu einer Temperaturänderung entlang des Austrittspfades sowie der damit thermisch in Verbindung stehenden Umgebung. Um diesen Austrittspfad mit optischen Mitteln nachverfolgen zu können, ist ausführungsgemäß eine Isolierschicht 2 vorgesehen, welche wenigstens Teile des Gehäuses 3 der Strömungskraftmaschine 1 umgibt. In die bzw. auf die Isolierschicht 2 ist hierbei ein thermochromer Farbstoff 4 aufgebracht bzw. eingearbeitet. Aufgrund der bei Leackageaustritt auftretenden Temperaturveränderung im Bereich des Austrittspfades kommt es zu einer Verfärbung des thermochromen Farbstoffes. Diese Verfärbung lässt somit bei Nachverfolgung den Austrittsort im Bereich des Gehäuses 3 der Strömungskraftmaschine 1 gezielt ermitteln.

Vorliegend ist die Strömungskraftmaschine 1 von insgesamt drei unterschiedlichen Isolierschichten 2 umgeben, welche sich insbesondere hinsichtlich der thermochromen Farbstoffe unterscheidet, die eine Verfärbung in unterschiedlichen Temperaturbereichen ermöglichen. So ist es insbesondere erforderlich, dass eine Verfärbung des thermochromen Farbstoffes, welcher dem Verdichter 11 der Strömungskraftmaschine 1 zugeordnet ist, in einem niedrigeren Temperaturbereich (150 °C bis 400 °C) erfolgt als in einem Bereich der Entspannungsturbine 13 (400 °C bis 700 °C). Der Bereich der Brennkammer 12 kann hierbei von einer geeigneten Isolierschicht mit thermochromem Farbstoff umgeben sein, muss jedoch nicht. Die entsprechenden Isolierschichten 2 sind im Bereich des Gehäuses 3 der Strömungskraftmaschine 1 angeordnet, welche gegenüber dem Boden durch Bodenstützen 7 abgestützt ist.

Figur 2 zeigt einen Teilbereich in schematischer perspektivischer Ansicht einer Ausführungsform einer erfindungsgemäßen Isolierschicht 2, welche als Isoliermatte ausgeführt ist. In die Oberfläche der Isolierschicht 2 ist ein thermochromer Farbstoff 4 eingebracht, insbesondere durch Einbringung in ein Gewebe. Der thermochrome Farbstoff 4 ist hierbei insbesondere an den Oberflächen der Isolierschicht 2 vorgesehen.

Weitere Ausführungsformen ergeben sich aus den Unteransprüchen.

## Patentansprüche

1. Strömungskraftmaschine (1) mit mindestens einer Isolierschicht (2), welche auf der Außenseite des Gehäuses (3) der Strömungskraftmaschine (1) zur thermischen Isolierung angeordnet ist, wobei die Isolierschicht (2) mit einem thermochromen Farbstoff (4) derart versehen ist, dass bei Leckageaustritt von Arbeitsfluid (5) aus der Strömungskraftmaschine (1) dieses mit der Isolierschicht (2) in thermischen Kontakt geraten und eine Verfärbung des thermochromen Farbstoffs (4) bewirken kann.

2. Strömungskraftmaschine nach Anspruch 1,
**dadurch gekennzeichnet, dass** der thermochrome Farbstoff (4) einen Thermolack umfasst.

3. Strömungskraftmaschine nach einem der vorhergehenden Ansprüche,
**dadurch gekennzeichnet, dass** der thermochrome Farbstoff (4) eine Verfärbung im Temperaturbereich zwischen 150 °C und 400 °C aufweist.

4. Strömungskraftmaschine nach einem der vorhergehenden Ansprüche 1 bis 2,
**dadurch gekennzeichnet, dass** der thermochrome Farbstoff (4) eine Verfärbung im Temperaturbereich zwischen 400 °C und 700 °C aufweist.

5. Strömungskraftmaschine nach einem der vorhergehenden Ansprüche,
**dadurch gekennzeichnet, dass** die Strömungskraftmaschine (1) als Gasturbine ausgeführt ist und auf der Außenseite des Gehäuses (3) der Gasturbine mindestens zwei unterschiedliche Isolierschichten (2) angeordnet sind, welche jeweils an unterschiedlichen Orten des Gehäuses (3) angeordnet sind, und welche unterschiedlichen Isolierschichten (2) jeweils mit unterschiedlichen thermochromen Farbstoffen (4) versehen sind.

6. Strömungskraftmaschine nach einem der vorhergehenden Ansprüche,
**dadurch gekennzeichnet, dass** die Isolierschicht (2) als Isoliermatte ausgeführt ist, welche wenigstens auf einer Seite, bevorzugt auf allen Seiten mit einem thermochromen Farbstoff (4) versehen ist.

7. Isolierschicht, geeignet zur Anordnung an der Außenseite eines Gehäuses (3) einer Strömungskraftmaschine (1), insbesondere einer Gastrubine, zur thermischen Isolierung,
**dadurch gekennzeichnet, dass** die Isolierschicht (2) mit einem thermochromen Farbstoff (4) versehen ist.

8. Isolierschicht nach Anspruch 7,
**dadurch gekennzeichnet, dass** die Isolierschicht (2) als Isoliermatte ausgeführt ist, welche wenigstens auf einer Seite, bevorzugt auf allen Seiten mit einem thermochromen Farbstoff (4) versehen ist.
